(19) Europäisches Patentamt
European Patent Office
Office européen des brevets

(11) **EP 4 542 311 A1**

(12) **EUROPÄISCHE PATENTANMELDUNG**

(43) Veröffentlichungstag:
**23.04.2025 Patentblatt 2025/17**

(21) Anmeldenummer: 23204534.4

(22) Anmeldetag: **19.10.2023**

(51) Internationale Patentklassifikation (IPC):
**G05B 13/04** (2006.01)    **G05B 17/02** (2006.01)
**G06N 7/00** (2023.01)

(52) Gemeinsame Patentklassifikation (CPC):
**G05B 13/04; G05B 17/02; G06N 7/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Robert Bosch GmbH**
**70442 Stuttgart (DE)**

(72) Erfinder:
- **Gruener, Stefan**
  **71549 Auenwald (DE)**
- **Schmidt, Kevin**
  **71083 Herrenberg (DE)**
- **Singh, Ranbir**
  **71272 Renningen (DE)**
- **Henkelmann, Nicola**
  **71665 Vaihingen/Enz (DE)**

(54) **VERFAHREN ZUM BESTIMMEN EINER SYSTEMANREGUNG DURCH WENIGSTENS EIN EINGANGSSIGNAL FÜR EINE MODELLBASIERTE REGELUNG EINES TECHNISCHEN SYSTEMS**

(57)    Die Erfindung betrifft ein Verfahren (100) zum Bestimmen einer Systemanregung durch wenigstens ein Eingangssignal für eine modellbasierte Regelung eines technischen Systems (1), umfassend die nachfolgenden Schritte:

- Bereitstellen (101) des wenigstens einen Eingangssignals, wobei das wenigstens eine Eingangssignal wenigstens einen Parameter des technischen Systems (1) physikalisch beeinflusst,

- Definieren (102) wenigstens einer Verteilungsannahme für den wenigstens einen Parameter,

- Definieren (103) einer Zielfunktion für eine Optimierung des wenigstens einen Eingangssignals unter Berücksichtigung der wenigstens einen definierten Verteilungsannahme, wobei die Zielfunktion das wenigstens eine Eingangssignal zumindest auf Basis einer Gewichtung einer Sensitivität des Eingangssignals optimiert,

- Bestimmen (104) eines numerischen Algorithmus zur Lösung der definierten Zielfunktion und eines Unsicherheitsquantifizierungsverfahrens zur Bestimmung der Sensitivität des wenigstens einen Eingangssignals,

- Optimieren (105) der definierten Zielfunktion auf Basis des bestimmten numerischen Algorithmus und des bestimmten Unsicherheitsquantifizierungsverfahrens,

- Bestimmen (106) der Systemanregung auf Basis der optimierten Zielfunktion.

Ferner betrifft die Erfindung ein Computerprogramm, eine Vorrichtung sowie ein Speichermedium zu diesem Zweck.

**Fig. 1**

EP 4 542 311 A1

**Beschreibung**

Die Erfindung betrifft ein Verfahren zum Bestimmen einer Systemanregung durch wenigstens ein Eingangssignal für eine modellbasierte Regelung eines technischen Systems. Ferner betrifft die Erfindung ein Computerprogramm, eine Vorrichtung sowie ein Speichermedium zu diesem Zweck.

Stand der Technik

Im Kontext der Systemidentifikation bei einer modellbasierten Regelung ist die Systemanregung besonders wichtig, da sie die Grundlage für die Identifikation der Systemparameter bildet. Durch den Einsatz verschiedener Anregungs-, beziehungsweise Eingangssignale kann das Verhalten des Systems unter verschiedenen Bedingungen untersucht werden. Diese Daten können dann genutzt werden, um ein mathematisches Modell des Systems zu erstellen oder zu kalibrieren.

Die Qualität der Systemanregung kann die Genauigkeit des identifizierten Modells maßgeblich beeinflussen. Eine suboptimale Anregung kann zu einem Modell führen, das nicht ausreichend genau ist, um die tatsächliche Dynamik des Systems zu repräsentieren. Daher ist es entscheidend, eine Anregung zu wählen, die informativ genug ist, um alle relevanten Dynamiken des Systems angemessen abzubilden.

Zur Identifikation von Modellparametern ist die Wahl der Systemanregung somit essenziell. Die Güte der Identifizierbarkeit hängt maßgeblich vom gewählten Systemeingang ab. Da die Wahl der Anregung von verschiedenen Kenngrößen des Regelkreises des Systems abhängig ist, kann die Fragestellung bezüglich der Systemanregung sehr systemspezifisch sein. Es gibt umfangreiche sogenannte "Measurement Catalogues" zur Systemidentifikation die auf Expertenwissen basieren. Diese sind eher empirischer Natur und über jahrelange Anwendung optimiert. Dies ist insbesondere beim Übergang auf neue Technologien problematisch, für welche zu wenig Erfahrungswerte vorliegen.

Offenbarung der Erfindung

Gegenstand der Erfindung ist ein Verfahren mit den Merkmalen des Anspruchs 1, ein Computerprogramm mit den Merkmalen des Anspruchs 8, eine Vorrichtung mit den Merkmalen des Anspruchs 9 sowie ein computerlesbares Speichermedium mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zum Bestimmen einer Systemanregung durch wenigstens ein Eingangssignal für eine modellbasierte Regelung eines technischen Systems, umfassend die nachfolgenden Schritte, wobei die Schritte wiederholt und/oder nacheinander durchgeführt werden können.

In einem ersten Schritt wird insbesondere das wenigstens eine Eingangssignal bereitgestellt, wobei das wenigstens eine Eingangssignal wenigstens einen Parameter des technischen Systems physikalisch beeinflusst. Beispielsweise kann das Eingangssignal eine elektrische Spannung oder ein Motordrehmoment sein. Das Eingangssignal kann im Rahmen der vorliegenden Erfindung auch als Eingangsgröße bezeichnet und verstanden werden. Ein möglicher Parameter des technischen Systems ist beispielsweise eine Trägheit eines Motors.

In einem weiteren Schritt wird vorzugsweise wenigstens eine Verteilungsannahme für den wenigstens einen Parameter definiert. In einem Beispiel kann es sich bei der Verteilungsannahme um eine Gleichverteilung mit einer unteren und oberen Schranke handeln. Dadurch kann vorteilhaft bereits vorhandenes Wissen über den wenigstens einen Parameter berücksichtigt werden und dadurch das Verfahren eine präzisere Optimierung des wenigstens einen Eingangssignals ermöglichen.

In einem weiteren Schritt kann eine Zielfunktion für eine Optimierung des wenigstens einen Eingangssignals unter Berücksichtigung der wenigstens einen definierten Verteilungsannahme definiert werden. Die Zielfunktion kann dabei das wenigstens eine Eingangssignal zumindest auf Basis einer Gewichtung einer Sensitivität des Eingangssignals optimieren. Ferner ist möglich, dass die Zielfunktion ein Verhältnis zwischen der Gewichtung der Sensitivität und einer Gewichtung des Eingangssignales selbst, d.h. beispielsweise eine Höhe der Spannung wenn das Eingangssignal eine elektrische Spannung ist, optimiert. Im Rahmen dieses Schrittes kann gegebenenfalls ferner mittels der Methode der intrusiven polynomiellen Chaosentwicklung (IPCE) ein eingangsunabhängiges Surrogatmodell bestimmt werden, dessen Ausgangsgrößen direkt Sensitivitätsmaße sind.

In einem weiteren Schritt wird insbesondere ein numerischer Algorithmus zur Lösung der definierten Zielfunktion und ein Unsicherheitsquantifizierungsverfahrens zur Bestimmung der Sensitivität des wenigstens einen Eingangssignals bestimmt. Für den numerischen Algorithmus können gradientenbasierte Verfahren wie interior point Verfahren oder trust region Algorithmen, oder globale Optimierungsverfahren wie simulated annealing oder genetische Algorithmen bestimmt werden. Für das Unsicherheitsquantifizierungsverfahren können sampling-basierte Verfahren, z.B. Monte Carlo, Latin Hypercube, oder ein intrusives Unsicherheitsquantifizierungsverfahren verwendet werden. Der numerische Algorithmus und das Unsicherheitsquantifizierungsverfahren können beispielsweise abhängig von einer Art des technischen Systems bestimmt werden.

In einem weiteren Schritt wird vorzugsweise die definierte Zielfunktion auf Basis des bestimmten numerischen Algorithmus und des bestimmten Unsicherheitsquantifizierungsverfahrens optimiert. Die Optimierung kann beispielsweise eine Maximierung oder eine Minimierung der Zielfunktion sein.

In einem weiteren Schritt wird insbesondere die Systemanregung auf Basis der optimierten Zielfunktion bestimmt.

Die wenigstens eine Verteilungsannahme gibt vorzugsweise zumindest einen Maximalwert und/oder einen Minimalwert für den wenigstens einen Parameter und/oder wenigstens eine Eigenschaft für eine Zulässigkeit des wenigstens einen Eingangssignals vor. Die Eigenschaft für die Zulässigkeit des wenigstens einen Eingangssignals kann beispielsweise eine Amplituden- oder Steigungsbeschränkung oder eine andere Differenzierbarkeitseigenschaft sein.

Ferner beschreibt die Sensitivität insbesondere ein Verhältnis für eine Veränderung des wenigstens einen Parameters des technischen Systems in Abhängigkeit von einer Veränderung des wenigstens einen Eingangssignals. Vereinfacht ausgedrückt beschreibt die Sensitivität insbesondere wie stark sich diese Ausgangsgröße des entsprechenden Parameters verändert, wenn das Eingangssignal verändert wird.

Ein weiterer Vorteil im Rahmen der Erfindung ist erzielbar, wenn im Rahmen des Definierens der wenigstens einen Zielfunktion festgelegt wird, ob die Sensitivität für den wenigstens einen Parameter des technischen Systems minimiert oder maximiert wird. Dadurch kann vorteilhaft je nach gegebenem Anwendungsfall eine Minimierung oder Maximierung der Sensitivität für den wenigstens einen Parameter durchgeführt werden.

Auch ist es optional denkbar, dass das Definieren der wenigstens einen Zielfunktion ferner den folgenden Schritt umfasst:

- Gewichten des wenigstens einen Eingangssignals, um das Optimieren der definierten Zielfunktion ferner unter Berücksichtigung der Gewichtung des wenigstens einen Eingangssignals durchzuführen.

Das Optimieren der definierten Zielfunktion unter Berücksichtigung der Gewichtung des wenigstens einen Eingangssignals wird vorzugsweise so durchgeführt, dass das Eingangssignal mathematisch zu einer Bestrafung führt.

Insbesondere kann das Optimieren der definierten Zielfunktion demnach auf Basis eines Verhältnisses zwischen der Gewichtung der Sensitivität und der Gewichtung des Eingangssignals durchgeführt werden, beispielsweise im Sinne eines Gütemaßes $g$. Eine hohes Gütemaß $g$ ergibt sich dabei vorzugsweise bei einer hohen Sensitivität und einer niedrigen Signalstärke des Eingangssignals.

Es kann optional möglich sein, dass das Optimieren der definierten Zielfunktion ferner den folgenden Schritt umfasst:

- Bestimmen wenigstens eines Freiheitsgrades für die Optimierung, wobei der wenigstens eine Freiheitsgrad zumindest eine Art des Eingangssignals beschreibt.

Die Art des Eingangssignals kann beispielsweise eine Signalstruktur sein. Mit den Freiheitsgraden wird vereinfacht ausgedrückt insbesondere bestimmt, welche Möglichkeiten es zur Optimierung des Eingangssignals gibt. So kann eine freie Optimierung des Eingangssignals oder lediglich eine Parameteroptimierung bei gegebener Signalstruktur, bzw. gegebenen Ansatzfunktionen möglich sein.

Nach einer weiteren Möglichkeit kann vorgesehen sein, dass das Verfahren ferner den folgenden Schritt umfasst:

- Definieren eines Abbruchkriteriums für das Optimieren der definierten Zielfunktion, wobei das Abbruchkriterium einen Schwellwert für die Sensitivität des wenigstens einen Eingangssignals und/oder eine Anzahl an Iterationen für das Optimieren der definierten Zielfunktion angibt,

Dabei kann das Optimieren der definierten Zielfunktion iterativ bis zu einem Erfüllen des definierten Abbruchkriteriums durchgeführt werden. So kann sichergestellt werden, dass die Sensitivität den Schwellwert überschreitet und somit auf Basis des Eingangssignals eine entsprechend optimierte Systemanregung möglich ist. Ferner kann durch die Anzahl an Iterationen ein Rechenbedarf vorteilhaft an einen vorliegenden Anwendungsfall, beziehungsweise ein vorliegendes technisches System angepasst werden.

Optional ist es denkbar, dass das Verfahren ferner den folgenden Schritt umfasst:

- Anwenden der bestimmten Systemanregung auf ein technisches System, um eine Systemidentifikation des technischen Systems durchzuführen, wobei auf Basis der bestimmten Systemanregung ein Wert für den wenigstens einen Parameter des technischen Systems ermittelt wird.

Das Verfahren kann beispielsweise für eine Systemidentifikation von Lenkungssystemen für eine Zahnstangenpositionsregelung (englisch: Rack Position Control, RPC) angewendet werden. Das wenigstens eine Eingangssignal der Systemanregung kann dabei zur Identifikation von Parametern an prototypischen Mustern oder im Rahmen einer End-of-Line Prüfung verwendet werden.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren zumindest teilweise auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Fig. 1     eine schematische Visualisierung eines Verfahrens, eines technischen Systems, einer Vorrichtung, eines Speichermediums sowie eines Computerprogramms gemäß Ausführungsbeispielen der Erfindung.

Fig. 2     eine schematische Darstellung eines Verfahrens gemäß Ausführungsbeispielen der Erfindung.

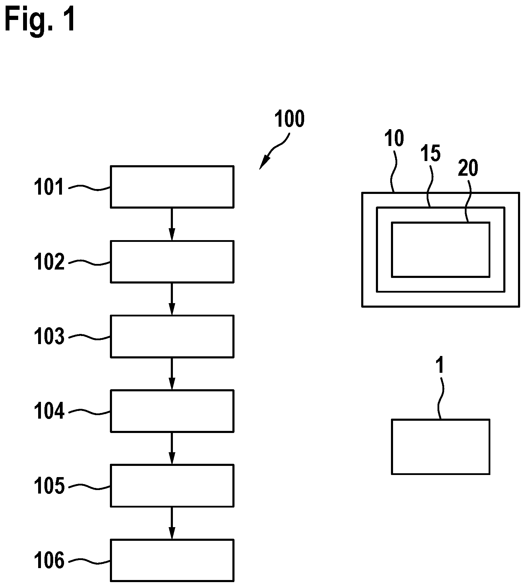

In Fig. 1 sind ein Verfahren 100, ein technisches System 1, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Bestimmen einer Systemanregung durch wenigstens ein Eingangssignal für eine modellbasierte Regelung eines technischen Systems 1. In einem ersten Schritt 101 wird das wenigstens eine Eingangssignal bereitgestellt, wobei das wenigstens eine Eingangssignal wenigstens einen Parameter des technischen Systems 1 physikalisch beeinflusst. In einem zweiten Schritt 102 wird wenigstens eine Verteilungsannahme für den wenigstens einen Parameter definiert. In einem dritten Schritt 103 wird eine Zielfunktion für eine Optimierung des wenigstens einen Eingangssignals unter Berücksichtigung der wenigstens einen definierten Verteilungsannahme definiert, wobei die Zielfunktion das wenigstens eine Eingangssignal zumindest auf Basis einer Gewichtung einer Sensitivität des Eingangssignals optimiert. In einem vierten Schritt 104 wird ein numerischer Algorithmus zur Lösung der definierten Zielfunktion und ein Unsicherheitsquantifizierungsverfahren zur Bestimmung der Sensitivität des wenigstens einen Eingangssignals bestimmt. In einem fünften Schritt 105 wird die definierte Zielfunktion auf Basis des bestimmten numerischen Algorithmus und des bestimmten Unsicherheitsquantifizierungsverfahrens optimiert. In einem sechsten Schritt 106 wird die Systemanregung auf Basis der optimierten Zielfunktion bestimmt.

Mit der Erfindung gemäß Ausführungsbeispielen ist es insbesondere möglich Systemanregungen zu bestimmen, die maßgeschneidert zur Identifikation spezifischer unbekannter Parameter des technischen Systems 1 sind. Dies kann genutzt werden eine Menge bestehende Eingangssignale auf die Eignung zur Identifikation dieser Parameter zu überprüfen. Sofern die bestehenden Eingangssignale parametrierbar sind, können diese Freiheitsgrade auf den aktuellen Fall optimiert werden. Zusätzlich können neue optimale Systemanregungen generiert werden. Die Erfindung gemäß Ausführungsbeispielen ermöglicht es insbesondere bestehendes Expertenwissen (z.B. in Form eines Measurement Catalogues) beim Transfer auf neue Anwendungsfälle zu nutzen. Zusätzlich kann die Vollständigkeit des Measurement Catalogues verifiziert werden, indem überprüft wird ob alle relevanten Parameter eine ausreichende Anregung erfahren.

Im Vergleich zum Stand der Technik bietet die Erfindung gemäß Ausführungsbeispielen beispielsweise die folgenden Vorteile. Anregungssignale zur Identifikation bestimmter Modellparameter können gezielt auf das vorhandene Vorwissen über das technische System generiert werden. Dies beinhaltet insbesondere die Maximierung der Sensitivität der zu identifizierenden Parameter sowie die Minimierung des Einflusses von anderen Parametern, welche das Schätzergebnis möglichst wenig beeinflussen sollen. Bestehendes Expertenwissen (z.B. in Form eines "Measurement Catalogues") kann auf die Eignung und Vollständigkeit zur Identifikation bestimmter Parameter überprüft werden. Dies kann folgende Aspekte beinhalten: Sind Freiheitsgrade in bestehenden Anregungssignalen vorhanden, können diese auf die vorhandenen Systeme optimiert werden. Sind bestimmte Parameter mit den vorhandenen Anregungs-, bzw. Eingangssignalen nicht ausreichend identifizierbar, kann der Measurement Catalogue systematisch um spezifische optimale Anregungssignale erweitert werden. Beim Übergang auf ein anderes System (z.B. eine neue Produktgeneration) kann ein bestehender Measurement Catalogue auf das neue System adaptiert werden. Dies unterstützt beispielsweise den Transfer des bestehenden Expertenwissens auf neue Technologien. Für spezielle Systemklassen ist es möglich ein Signalgenerierungsproblem zu lösen - ähnlich wie bei Ansätzen zur modellprädiktiven Regelung. Dies ermöglicht beispielsweise eine online-Optimierung bzw. eine Adaptivität auf Parameterschwankungen, sofern das System eine entsprechende Anregung während des Betriebs erlaubt.

Die Erfindung gemäß Ausführungsbeispielen ist insbesondere im Kontext einer Systemidentifikation im Rahmen einer modellbasierten Regelung relevant. Ziel der Systemidentifikation ist es vorzugsweise die Parameter eines technischen Systems 1 zu bestimmen. Ein systematischer Entwurf bzw. die systematische Analyse der dafür verwendeten Systemanregung ist ein Aspekt der vorliegenden Erfindung gemäß Ausführungsbeispielen. Diese ist insbesondere eine Grundlage für eine modelbasierte Regelung.

Eine Grundlage des Verfahrens gemäß Ausführungsbeispielen ist insbesondere die Beschreibung des Systemverhaltens durch ein Modell $\mathcal{M}$ , das einen Zusammenhang zwischen dem zu entwerfenden Systemeingang $u(t) \in \mathbb{R}^m$ , den Mess-/Ausgangsgrößen $y(t) \in \mathbb{R}^q$ sowie den relevanten Parametern $p \in \mathbb{R}^n$ herstellt

$$y(t) = \mathcal{M}(u(t), p). \tag{1}$$

Handelt es sich bei dem Modell $\mathcal{M}$ um ein dynamisches Zustandsraummodell mit internen Zuständen, können weitere Vereinfachungen notwendig sein, die nachstehend ausgeführt werden. Die Parameter werden vorzugsweise als unsichere Größen interpretiert und durch eine Wahrscheinlichkeitsannahme $p \sim \Omega$ beschrieben. Im Folgenden wird insbesondere ohne Beschränkung der Allgemeinheit eine Gleichverteilung $p \in \mathcal{U}(p^-, p^+)$ mit oberen und unteren Grenzen $p^- \leq p \leq p^+$ angesetzt, die den zu erwartenden Parameterbereich eingrenzen. Die Zielgröße der Optimierung der Eingangsgröße basiert beispielsweise auf einer globalen Sensitivitätsanalyse der Messgrößen. Die Sensitivität $S_{ij}(t)$ einer Ausgangsgröße $y_i$ bzgl. des Parameters $p_j$ kann über eine Sobol-Sequenz bestimmt werden:

$$S_{ij}(t) = \frac{\mathrm{var}_{p_j}\big[\mathbb{E}_{p \sim j}\big(y_i | p_j\big)\big](t)}{\mathrm{var}[y_i](t)} \qquad S(t) = \mathrm{vec}\Big(S_{ij}(t)\Big) \tag{2}$$

Wobei $\sim j$ insbesondere alle Parameter außer $p_j$ bezeichnet. Es wird beispielhaft der Sobol-Index erster Ordnung als Sensitivitätsmaß $S_{ij}$ verwendet. Andere Maße wie der Total-Effekt-Sobol-Index sind ebenfalls möglich. Zur Berechnung der Sensitivitäten gemäß Gleichung (2) für ein bestimmten Eingang können verschiedene Unsicherheitsquantifizierungsverfahren (englisch: Uncertainty Quantification (UQ)) verwendet werden, z.B. Sampling-basierte Monte Carlo-Simulationen, Latin-Hypercube Sampling, (adaptive) pseudospektrale Projektionen oder eine intrusive Polynomielle Chaosentwicklung (IPCE).

Die Bestimmung des Eingangssignals u(t) erfolgt insbesondere über das Optimalsteuerungsproblem

$$\max_{u(t) \in \mathbb{U}, t \in [t_0 t_f]} J = \int_{t_0}^{t_f} g(S(t), u(t))\, \mathrm{d}t, \qquad \text{s.t.} \quad (1), (2), \ p \in \mathcal{U}(p^-, p^+) \tag{3}$$

Dabei wird insbesondere das optimale Eingangssignal durch Optimieren einer Zielfunktion, insbesondere durch Maximierung des integralen Gütemaß g in Abhängigkeit der Sensitivität S und des Eingangs u, ermittelt. Eine mögliche Zielfunktion, insbesondere in Form eines Gütemaßes g, kann folgende Struktur aufweisen:

$$g(S, u) = \|S\|_Q^2 - \epsilon \|u\|_R^2 \qquad\qquad (4)$$

Der erste Term stellt insbesondere die Optimierung der Sensitivitäten dar, bspw. über die gewichtete quadratische Norm dar. Über die Diagonaleinträge der Matrix $Q$ kann ausgewählt werden, ob über bestimmte Parameter maximiert ($Q_{ii} > 0$) oder minimiert ($Q_{ii} < 0$) werden soll. Eine von Null verschiedene Wahl der Nichtdiagonaleinträge $Q_{ji} = Q_{ij} < 0$ kann weiterhin verwendet werden, um die Maximierung verschiedener Sensitivitäten zur gleichen Zeit zu bestrafen. Sind mehrere Messgrößen $q \geq 1$ vorhanden, kann eine Gewichtung der Sensitivitäten $S_{i,(\cdot)}$ vorgenommen werden. Der zweite Summand in Gleichung (4) erlaubt insbesondere die Bestrafung der Signalenergie des Eingangssignals, bspw. über eine Gewichtungsmatrix $R$. Weiterhin beschreibt die Menge $\mathbb{U}$ vorzugsweise die zulässigen Eingangssignale. Dies kann beispielsweise Amplituden- oder Steigungsbeschränkungen oder andere Differenzierbarkeitseigenschaften umfassen:

$$\mathbb{U} = \left\{ u(\cdot) \in \mathcal{C}^2\left([t_0, t_f]\right) \big| u^- \leq u(t) \leq u^+, \dot{u}^- \leq \dot{u}(t) \leq \dot{u}^+, \ \forall t \in [t_0, t_f] \right\}, \qquad (5)$$

Liegt eine parametrierbare Signalstruktur $u(t,\theta)$ mit Freiheitsgraden $\theta$ vor, bspw. als Linearkombination $u(t) = \sum_i \theta_i u_i^0(t)$ kann das Optimierungsproblem gemäß Gleichung (3) direkt über die Freiheitsgrade $\theta$ anstatt über die Zeitfunktion $u(t)$ erfolgen.

Für bestimmte Modellklassen gemäß Gleichung (1) linearer und nichtlinearer dynamischer Systeme können die Sensitivitätsmaße durch intrusive UQ-Verfahren besonders effizient bestimmt werden. Dies ermöglicht insbesondere eine echtzeitfähige Implementierung des Verfahrens gemäß Ausführungsbeispielen und wird am Beispiel eines linearen Zustandsraummodells dargestellt:

$$\dot{x}(t) = A(p)x(t) + B(p)u(t) + w(p) \qquad t > t_0, \quad x(t_0) = x_0(p) \qquad (6)$$

$$y(t) = C(p)x(t) + D(p)u(t).$$

Mittels der Methode der intrusive Polynomielle Chaosentwicklung (IPCE) kann eine eingangsunabhängiges Surrogatmodell bestimmt werden, dessen Ausgangsgrößen direkt Sensitivitätsmaße gemäß Gleichung (2) sind

$$\dot{X}(t) = A'X(t) + B'u(t) + W' \qquad t > t_0, \quad x(t_0) = X_0 \qquad (7)$$

$$S(t) = VX(t)$$

Dies ermöglicht es beispielsweise, die Sensitivitäten mit lediglich einer Simulation des Surrogatmodells gemäß Gleichung (7) zu bestimmen und die potenziell rechenaufwändige Bestimmung der Matrizen $A', B', W', V'$ im Rahmen eines Preprocessing-Schritts zu bestimmen. Zur Optimierungszeit müssen dann insbesondere keine Sampling-basierten Verfahren zur Bestimmung der Sensitivitätsmaße $S(t)$ durchgeführt werden.

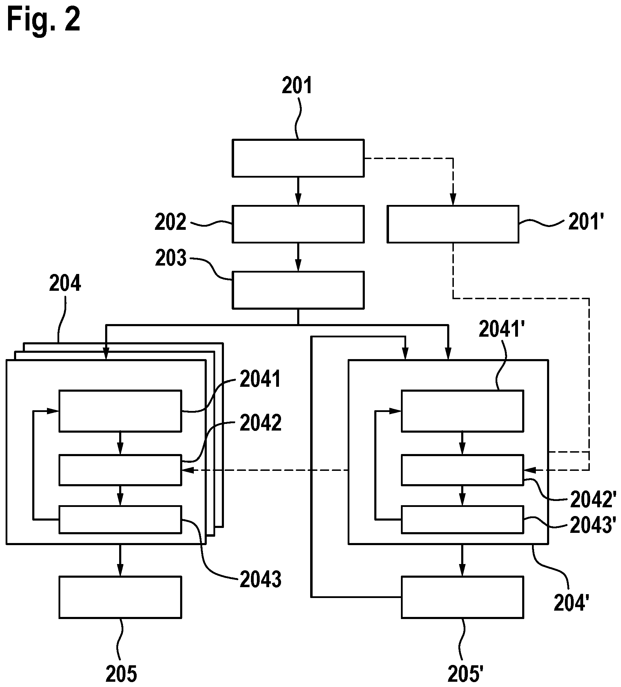

Die Bestimmung optimaler Eingangssignale erfolgt gemäß einem Ausführungsbeispiel durch die folgenden Schritte, welche in Fig. 2 veranschaulicht sind. In einem ersten Schritt 201 werden dabei Verteilungsannahmeen des wenigstens einen Parameters des technischen Systems 1 definiert. Dies beinhaltet beispielsweise Wahrscheinlichkeitsmaße der zu betrachtenden Parameter $p$, z.B. zu erwartende Maximal- bzw. Minimalwerte und/oder eine Definition zulässiger Anregungen, z.B. Menge $\mathbb{U}$ der erlaubten Eingangssignale gemäß Gleichung (5) und/oder optional gemäß Schritt 201' eine Bestimmung des Surrogatmodells, z.B. Gleichung (7), sofern eine dafür geeignete Systemklasse, z.B. Gleichung (6), vorliegt. In einem zweiten Schritt 202 wird eine Zielfunktion der Optimierung definiert, z.B. in Form von Gleichung (4). Dabei wird eine Gewichtung der Sensitivitäten bestimmt, d.h. es wird insbesondere eine Definition bereitgestellt bzgl. welcher Parameter die Sensitivität maximiert oder minimiert werden sollen (vgl. Gewichtungsmatrix $Q$). Sollen mehrere Parameter mit einer Systemanregung identifiziert werden, können diese entweder gemeinsam mit einem oder mit separaten Eingangssignalen identifiziert werden. Letzteres bedeutet insbesondere, dass die weiteren Schritte 203 bis 205 für jede Konfiguration mehrfach durchlaufen werden. Ferner wird eine Gewichtung des Eingangssignals, z.B. über Gewichtungsmatrix $R$, $\varepsilon$ durchgeführt. In einem dritten Schritt 203 werden Freiheitsgrade der Optimierung definiert, insbesondere ein Zeithorizont des Optimierungsproblems und eine Art des Eingangssignals, d.h. beispielsweise ob eine freie Optimierung des Eingangssignals oder eine Parameteroptimierung bei gegebener Signalstruktur bzw. gegebenen Ansatzfunktionen durchgeführt wird. In einem vierten Schritt 204 gemäß einer ersten Alternative wird das Optimierungsproblem gemäß Gleichung (3) gelöst. Dabei wird ein numerischer Algorithmus bestimmt 2041, z.B. gradientenbasierte Verfahren wie interior point Verfahren oder trust region Algorithmus, oder globale Optimierungsverfahren wie simulated annealing oder genetische Algorithmen. Ferner wird ein Unsicherheitsquantifizierungsverfahren (UQ-Verfahren) zum Ermitteln der Sensitivitätsmaße gemäß Gleichung (2) für ein von dem numerischen Algorithmus bestimmten Eingangssignal bestimmt 2042. Dabei können sampling-basierte Verfahren, z.B. Monte Carlo, Latin Hypercube, oder ein intrusives UQ-Verfahren verwendet werden. Sofern in Schritt 1 ein Surrogatmodell bestimmt wurde, können die Sensitivitätsmaße über das intrusive UQ-Verfahren direkt bestimmt werden. Ferner erfolgt in diesem Schritt eine iterative Lösung des Optimierungsproblems gemäß Gleichung (3) mit den in dem bestimmten numerischen Algorithmus und Unsicherheitsquantifizierungsverfahren bis zum Erreichen eines Abbruchkriteriums 2043. In einem fünften Schritt 205 kann eine Applikation der/des Eingangssignal(e) auf das technische System 1 erfolgen.

Soll eine Optimierung in Echtzeit erfolgen, kann gemäß einer zweiten Alternative eine iterative Abfolge der Schritte 204' mit den Schritten 2041', 2042' und 2043' sowie Schritt 205' vorgesehen sein. In diesem Fall wird vorzugsweise die Systemantwort des letzten Zyklus als Anfangswert x0 bzw. X0 der nächsten Iteration verwendet.

Die Erfindung kann in jedem technischen Kontext verwendet werden, dem eine modellbasierte Regelfunktion zu Grunde liegt. Ein möglicher Anwendungsfall ist insbesondere die Identifikation der Parameter im Lenkungssystem, d.h. für die Zahnstangen-Positionsregelung, z.B. für Steer-by-Wire-Systeme. Dabei bildet das Modell gemäß Gleichung (1) insbesondere den Zusammenhang von Motormoment auf die Position der Zahnstange bzw. auf den Motorwinkel ab.

Ein weiterer möglicher Anwendungsfall ist die Identifikation des Quer- und/oder Längsführungsverhalten von Fahrzeugen. Hier sind beispielsweise der Lenkwinkel und die gewünschte Beschleunigung Eingangssignale und Gierrate, Schwimmwinkel oder die Fahrzeugposition und -geschwindigkeit relevante Parameter. Weitere mögliche Anwendungsfälle sind die (Großraum-)Robotik oder der Regelung von elektrischen Maschinen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

**Patentansprüche**

1. Verfahren (100) zum Bestimmen einer Systemanregung durch wenigstens ein Eingangssignal für eine modellbasierte Regelung eines technischen Systems (1), umfassend die nachfolgenden Schritte:

   - Bereitstellen (101) des wenigstens einen Eingangssignals, wobei das wenigstens eine Eingangssignal wenigstens einen Parameter des technischen Systems (1) physikalisch beeinflusst,
   - Definieren (102) wenigstens einer Verteilungsannahme für den wenigstens einen Parameter,
   - Definieren (103) einer Zielfunktion für eine Optimierung des wenigstens einen Eingangssignals unter Berücksichtigung der wenigstens einen definierten Verteilungsannahme, wobei die Zielfunktion das wenigstens eine Eingangssignal zumindest auf Basis einer Gewichtung einer Sensitivität des Eingangssignals optimiert,
   - Bestimmen (104) eines numerischen Algorithmus zur Lösung der definierten Zielfunktion und eines Unsicherheitsquantifizierungsverfahrens zur Bestimmung der Sensitivität des wenigstens einen Eingangssignals,
   - Optimieren (105) der definierten Zielfunktion auf Basis des bestimmten numerischen Algorithmus und des bestimmten Unsicherheitsquantifizierungsverfahrens,
   - Bestimmen (106) der Systemanregung auf Basis der optimierten Zielfunktion.

2. Verfahren (100) nach Anspruch 1,
   **dadurch gekennzeichnet,**

   **dass** die wenigstens eine Verteilungsannahme zumindest einen Maximalwert und/oder einen Minimalwert für den wenigstens einen Parameter und/oder wenigstens eine Eigenschaft für eine Zulässigkeit des wenigstens einen Eingangssignals vorgibt, und/oder
   die Sensitivität ein Verhältnis für eine Veränderung des wenigstens einen Parameters des technischen Systems (1) in Abhängigkeit von einer Veränderung des wenigstens einen Eingangssignals beschreibt.

3. Verfahren (100) nach einem der vorhergehenden Ansprüche,
   **dadurch gekennzeichnet,**
   **dass** im Rahmen des Definierens (103) der wenigstens einen Zielfunktion festgelegt wird, ob die Sensitivität für den wenigstens einen Parameter des technischen Systems (1) minimiert oder maximiert wird.

4. Verfahren (100) nach einem der vorhergehenden Ansprüche,
   **dadurch gekennzeichnet,**
   **dass** das Definieren (103) der wenigstens einen Zielfunktion ferner den folgenden Schritt umfasst:

- Gewichten des wenigstens einen Eingangssignals, um das Optimieren (105) der definierten Zielfunktion ferner unter Berücksichtigung der Gewichtung des wenigstens einen Eingangssignals durchzuführen.

5. Verfahren (100) nach einem der vorhergehenden Ansprüche,
**dadurch gekennzeichnet,**
**dass** das Optimieren (105) der definierten Zielfunktion ferner den folgenden Schritt umfasst:

- Bestimmen wenigstens eines Freiheitsgrades für die Optimierung, wobei der wenigstens eine Freiheitsgrad zumindest eine Art des Eingangssignals beschreibt.

6. Verfahren (100) nach einem der vorhergehenden Ansprüche,
**dadurch gekennzeichnet,**

**dass** das Verfahren ferner den folgenden Schritt umfasst:

- Definieren eines Abbruchkriteriums für das Optimieren (105) der definierten Zielfunktion, wobei das Abbruchkriterium einen Schwellwert für die Sensitivität des wenigstens einen Eingangssignals und/oder eine Anzahl an Iterationen für das Optimieren (105) der definierten Zielfunktion angibt,

wobei das Optimieren (105) der definierten Zielfunktion iterativ bis zu einem Erfüllen des definierten Abbruchkriteriums durchgeführt wird.

7. Verfahren (100) nach einem der vorhergehenden Ansprüche,
**dadurch gekennzeichnet,**
**dass** das Verfahren ferner den folgenden Schritt umfasst:

- Anwenden der bestimmten Systemanregung auf ein technisches System (1), um eine Systemidentifikation des technischen Systems (1) durchzuführen, wobei auf Basis der bestimmten Systemanregung ein Wert für den wenigstens einen Parameter des technischen Systems (1) ermittelt wird.

8. Computerprogramm (20), umfassend Befehle, die bei der Ausführung des Computerprogramms (20) durch einen Computer (10) diesen veranlassen, das Verfahren (100) nach einem der Ansprüche 1 bis 6 auszuführen.

9. Vorrichtung (10) zur Datenverarbeitung, die eingerichtet ist, das Verfahren (100) nach einem der Ansprüche 1 bis 6 auszuführen.

10. Computerlesbares Speichermedium (15), umfassend Befehle, die bei der Ausführung durch einen Computer (10) diesen veranlassen, die Schritte des Verfahrens (100) nach einem der Ansprüche 1 bis 6 auszuführen.

# Fig. 1

101

102

103

104

105

106

100

10 15 20

1

# Fig. 2

**EUROPÄISCHER RECHERCHENBERICHT**

Nummer der Anmeldung

EP 23 20 4534

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SONG EUNHYE ET AL: "Advanced tutorial: Input uncertainty quantification", PROCEEDINGS OF THE WINTER SIMULATION CONFERENCE 2014, IEEE, 7. Dezember 2014 (2014-12-07), Seiten 162-176, XP032727874, DOI: 10.1109/WSC.2014.7019886 [gefunden am 2015-01-23] * das ganze Dokument * ----- | 1-10 | INV. G05B13/04 G05B17/02 G06N7/00 |
| X | CALLAFON R A DE ET AL: "CONTROL RELEVANT IDENTIFICATION OF A COMPACT DISC PICK-UP MECHANISM", PROCEEDINGS OF THE CONFERENCE ON DECISION AND CONTROL. SAN ANTONIO, DEC. 15 - 17, 1993; [PROCEEDINGS OF THE CONFERENCE ON DECISION AND CONTROL], NEW YORK, IEEE, US, Bd. 3 OF 04, 15. Dezember 1993 (1993-12-15), Seiten 2050-2055, XP000438995, DOI: 10.1109/CDC.1993.325558 ISBN: 978-0-7803-1298-2 * das ganze Dokument * ----- | 1-10 | |
| X | AL RESUL ET AL: "Stochastic simulation-based superstructure optimization framework for process synthesis and design under uncertainty", COMPUTERS & CHEMICAL ENGINEERING, PERGAMON PRESS, OXFORD, GB, Bd. 143, 30. September 2020 (2020-09-30), XP086330798, ISSN: 0098-1354, DOI: 10.1016/J.COMPCHEMENG.2020.107118 [gefunden am 2020-09-30] * das ganze Dokument * ----- -/-- | 1-10 | RECHERCHIERTE SACHGEBIETE (IPC) G05B G06N |

Der vorliegende Recherchenbericht wurde für alle Patentansprüche erstellt

| Recherchenort | Abschlußdatum der Recherche | Prüfer |
|---|---|---|
| Den Haag | 26. März 2024 | Kielhöfer, Patrick |

Europäisches
Patentamt

European
Patent Office

Office européen
des brevets

# EUROPÄISCHER RECHERCHENBERICHT

**Nummer der Anmeldung**

**EP 23 20 4534**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LANDAU I D: "Adaptive control. a perspective", ADAPTIVE SYSTEMS FOR SIGNAL PROCESSING, COMMUNICATIONS, AND CONTROL SY MPOSIUM 2000. AS-SPCC. THE IEEE 2000 OCTOBER 1-4, 2000, PISCATAWAY, NJ, USA,IEEE, 1. Oktober 2000 (2000-10-01), Seiten 181-186, XP010521633, ISBN: 978-0-7803-5800-3 * das ganze Dokument * ----- | 1-10 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 26. März 2024 | Kielhöfer, Patrick |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
Dokument

EPO FORM 1503 03.82 (P04C03)